# EUROPEAN PATENT SPECIFICATION

(11) **EP 3 079 425 B1**
(45) Date of publication and mention of the grant of the patent: **19.06.2019**
(21) Application number: 14873641.6
(22) Date of filing: 25.07.2014
(51) Int. Cl.: H04W 72/08, H04B 7/06

(54) **ANTENNA ALLOCATION METHOD AND DEVICE**
VERFAHREN UND VORRICHTUNG ZUR ANTENNENZUWEISUNG
PROCÉDÉ ET DISPOSITIF D'ATTRIBUTION D'ANTENNES

(30) Priority: 26.12.2013 CN 201310731448
(43) Date of publication of application: 12.10.2016
(73) Proprietor: Huawei Technologies Co., Ltd., Longgang District Shenzhen, Guangdong 518129 (CN)
(72) Inventor: QIAO, Deli, Shenzhen Guangdong 518129 (CN); WU, Ye, Shenzhen Guangdong 518129 (CN)
(74) Representative: Epping - Hermann - Fischer
(86) International application number: PCT/CN2014/083043
(87) International publication number: WO 2015/096472

(56) References cited:
- EP-A1- 2 429 094
- CN-A- 101 742 539
- CN-A- 102 017 454

## Description

### TECHNICAL FIELD

The present invention relates to the field of communications technologies, and in particular, to an antenna allocation method and apparatus.

### BACKGROUND

With rapid development of communications technologies, increasing requirements of users on a data rate and a shortage of spectrum resources become great challenges for wireless communications. A next-generation mobile communications system needs to reach higher spectrum utilization, so as to provide a service of a higher data rate for a large quantity of users. In a next-generation cellular radio communications technology, increasing an antenna quantity on a base station side is widely approved in the industry. Particularly, when the antenna quantity is extremely large, many antenna characteristics may be used. For example, a correlation of channels formed between different users and a base station is relatively weak, and small-scale fading and thermal noise may be averaged. In a large-scale antenna system, a base station may serve multiple users equipped with a single antenna, so as to form spatial multiplexing, that is, MU-MIMO (Multi-User Multi-Input Multi-Output, multi-user multi-input multi-output), so that system performance such as a throughput and energy efficiency may all be improved.

During downlink transmission, the antenna quantity is extremely large, and therefore beamforming may be implemented by using a precoding technology, so that information transmitted to a given user does not cause interference to another user in a cell. Existing precoding technologies include ZF (Zero-Forcing, zero forcing), MF (Matched-Filtering, matched filtering), and the like. MF is used as an example. First, a base station and a user obtain estimation of all channels formed between antennas and the user, and then conjugate of channel estimation is used during precoding. In this way, information to be sent to each user is combined with channel conjugate by means of multiply, and combined information is sent. Therefore, during precoding, the base station and the user need to know all channels between the base station and the user. However, in an existing antenna allocation solution, a transmitting apparatus is generally required to acquire all channel information, and then allocate an antenna based on different standards, where the standards may be an SINR (Signal and Interference to Noise Ratio, signal to interference plus noise ratio), a channel capacity, and the like. In a large-scale antenna system, with an increasing antenna quantity, if channels of all antennas are acquired, channel estimation workload accordingly increases, occupied system resources also increase, and costs to be paid are extremely high, which seriously affects system performance.

EP 2 429 094 A1 discloses a method and device for detecting transmitting antenna port configuration in a LTE system. The method includes: receiving a signal transmitted by a transmitting end at a receiving end, extracting from the signal a reference signal transmitted by each transmitting antenna port and descrambling; calculating and obtaining reference signal energy of each transmitting antenna port, dividing the reference signal energy into a first type of reference signal energy and a second type of reference signal energy, and determining a current bandwidth; and comparing the first type of reference signal energy with the second type of reference signal energy, and determining the number of transmitting antenna ports according to a comparison result. CN 101 742 539 A discloses a wireless resource allocation method and a system. A detection of wireless resources and transmission quality through the relevant parameters of the data signals transmitted in the system is carried out, and the allocation of the wireless resources according to the detection result is appropriately adjusted, thereby improving the performances of the whole system and ensuring the smooth wireless transmission.

### SUMMARY

Embodiments of the present invention provide an antenna allocation method and apparatus, so as to resolve a problem that an existing antenna allocation solution affects system performance.

The invention is defined by the independent claims. Advantageous embodiments of the invention are given in the dependent claims. Further, embodiments and/or examples mentioned in the description that do not fall under the scope of the claims are useful for understanding the invention.

To resolve the foregoing technical problem, the present invention discloses the following technical solutions:
According to a first aspect, the present invention provides an antenna allocation method, including: acquiring location information of a terminal; determining, according to the location information, a reference quantity of antennas that are at a transmit end and used to send data to the terminal; determining whether a transmission performance difference is less than a preset transmission performance threshold, where the transmission performance difference is a difference between transmission performance of the terminal that is based on antennas of the reference quantity and transmission performance of the terminal that is based on all antennas at the transmit end; when the transmission performance difference is not less than the preset transmission performance threshold, increasing the reference quantity, and performing again the step of determining whether a transmission performance difference is less than a preset transmission performance threshold, until the transmission performance difference is less than the preset transmission performance threshold; and when the transmission performance difference is less than the preset transmission performance threshold, decreasing the reference quantity; determining whether a transmission performance difference obtained after the reference quantity is decreased is less than the preset transmission performance threshold; when the transmission performance difference obtained after the reference quantity is decreased is not less than the preset transmission performance threshold, performing again the step of increasing the reference quantity; and when the transmission performance difference obtained after the reference quantity is decreased is less than the preset transmission performance threshold, determining whether a decrement of the reference quantity is less than a preset value; and when the decrement of the reference quantity is not less than the preset value, performing again the step of decreasing the reference quantity, until the decrement of the reference quantity is less than the preset value; and when the decrement of the reference quantity is less than the preset value, determining the decreased reference quantity as an target quantity; and allocating, at the transmit end, antennas of the target quantity to the terminal.

According to a second aspect, the present invention provides an antenna allocation apparatus, including: a location information acquiring unit, configured to acquire location information of a terminal; a reference quantity determining unit, configured to determine, according to the location information, a reference quantity of antennas used to send data to the terminal; a first transmission performance determining unit, configured to determine whether a transmission performance difference is less than a preset transmission performance threshold, where the transmission performance difference is a difference between transmission performance of the terminal that is based on antennas of the reference quantity and transmission performance of the terminal that is based on all antennas at a transmit end; a first adjustment unit, configured to: when the transmission performance difference is not less than the preset transmission performance threshold, increase the reference quantity until the transmission performance difference is less than the preset transmission performance threshold, where the first transmission performance determining unit is further configured to determine whether a transmission performance difference obtained after the reference quantity is increased is less than the preset transmission performance threshold; a second adjustment unit, configured to: when the transmission performance difference is less than the preset transmission performance threshold, decrease the reference quantity; a second transmission performance determining unit, configured to determine whether a transmission performance difference obtained after the reference quantity is decreased is less than the preset transmission performance threshold, wherein the first adjustment unit is further configured to: when the transmission performance difference obtained after the reference quantity is decreased is not less than the preset transmission performance threshold, increase the reference quantity until the transmission performance difference is less than the preset transmission performance threshold; a reference quantity variation determining unit, configured to: when the transmission performance difference obtained after the reference quantity is decreased is less than the preset transmission performance threshold, determine whether a decrement of the reference quantity is less than a preset value, wherein the second adjustment unit is further configured to: when the decrement of the reference quantity is not less than the preset value, decrease the reference quantity until the decrement of the reference quantity is less than the preset value; and a second target quantity determining unit, configured to: when the decrement of the reference quantity is less than the preset value, determine the decreased reference quantity as an target quantity, and an allocation unit, configured to allocate, at the transmit end, antennas of the target quantity to the terminal.

It can be learned from the foregoing technical solutions that according to the antenna allocation method and apparatus provided in the present invention, antennas of a target quantity may be allocated to a terminal according to location information of the terminal, and during subsequent precoding, channel estimation may be performed directly on the allocated antennas of the target quantity. Compared with the prior art in which all channel information needs to be acquired, the antenna allocation method in which the target quantity of antennas allocated to the terminal is less than a quantity of all antennas at a transmit end may reduce channel estimation workload during precoding, and because a quantity of antennas allocated to the terminal is decreased, operation complexity during precoding may be further reduced, which further improves system performance.

### BRIEF DESCRIPTION OF DRAWINGS

To describe the technical solutions in the embodiments of the present invention or in the prior art more clearly, the following briefly describes the accompanying drawings required for describing the embodiments or the prior art. Apparently, a person of ordinary skill in the art may still derive other drawings from these accompanying drawings without creative efforts.
FIG. 1 is a schematic flowchart of an antenna allocation method according to an embodiment of the present invention;
FIG. 2 is a schematic flowchart of step S102 according to an embodiment of the present invention;
FIG. 3 is another schematic flowchart of step S102 according to an embodiment of the present invention;
FIG. 4 is a schematic flowchart of another antenna allocation method according to an embodiment of the present invention;
FIG. 5 is a schematic flowchart of still another antenna allocation method according to an embodiment of the present invention;
FIG. 6 is a schematic structural diagram of an antenna allocation apparatus according to an embodiment of the present invention;
FIG. 7 is a schematic structural diagram of a reference quantity determining unit according to an embodiment of the present invention;
FIG. 8 is a schematic structural diagram of another reference quantity determining unit according to an embodiment of the present invention;
FIG. 9 is a schematic structural diagram of another antenna allocation apparatus according to an embodiment of the present invention;
FIG. 10 is a schematic structural diagram of still another antenna allocation apparatus according to an embodiment of the present invention; and
FIG. 11 is a schematic structural diagram of an antenna allocation apparatus according to an embodiment of the present invention.

### DESCRIPTION OF EMBODIMENTS

To make a person skilled in the art understand the technical solutions in the embodiments of the present invention better, and make the objectives, features, and advantages of the embodiments of the present invention clearer, the following further describes the technical solutions in the embodiments of the present invention in detail with reference to the accompanying drawings.

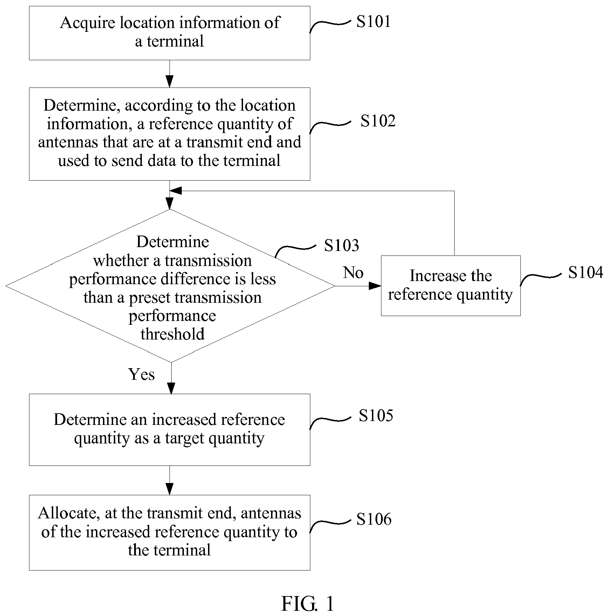

FIG. 1 is a schematic flowchart of an antenna allocation method according to an embodiment of the present invention. The antenna allocation method is applied to an antenna transmitting apparatus in a system such as OFDM (Orthogonal Frequency Division Multiplexing, orthogonal frequency division multiplexing), FDMA (Frequency Division Multiple Access, Frequency Division Multiple Access), CDMA (Code Division Multiple Access, Code Division Multiple Access), or TDMA (Time Division Multiple Access, Time Division Multiple Access). As shown in FIG. 1, the method may include the following steps:
S101. Acquire location information of a terminal.

Before scheduling is performed for the terminal, a control instruction may be first sent to the terminal to control the terminal to feed back the location information of the terminal. The location information of the terminal may be acquired by using an antenna to receive the fed back information. In this embodiment of the present information, the location information may include at least one or a combination of multiple of location coordinates, RSRQ, or RSRP. The location coordinates are geographic location coordinates of the terminal, and the terminal acquires the geographic location coordinates of the terminal by using a GPS or in another positioning manner. In addition, because a path loss difference when the terminal sends or receives a signal is different when the terminal has a different distance from an antenna, a location of the terminal relative to the antenna used as a reference may also be obtained according to the RSRQ (Reference Signal Received Quality, reference signal received quality) or the RSRP (Reference Signal Receiving Power, reference signal received power).

S102. Determine, according to the location information, a reference quantity of antennas that are at a transmit end and used to send data to the terminal.

In this embodiment of the present invention, the reference quantity determined according to the location information may be empirical data, that is, a correspondence between location information and a reference quantity is preset, and the correspondence is stored. After location information is acquired, the prestored correspondence between location information and a reference quantity is searched for a corresponding reference quantity. Optionally, in this embodiment of the present invention, the reference quantity is at least one.

Because the location information has multiple types and may include at least one of the location coordinates, the RSRQ, or the RSRP, and parameters of all types are different from each other, all correspondences between a reference quantity and each type of location information are different from each other.

S103. Determine whether a transmission performance difference is less than a preset transmission performance threshold.

In this embodiment of the present invention, the transmission performance difference refers to a difference between transmission performance of the terminal that is based on antennas of the reference quantity and transmission performance of the terminal that is based on all antennas at the transmit end. In addition, both the transmission performance of the terminal that is based on the antennas of the reference quantity and the transmission performance of the terminal that is based on the antennas of the reference quantity at the transmit end may be obtained in an offline simulation manner. The preset transmission performance threshold represents a loss degree of antenna system performance of the terminal. A larger preset transmission performance threshold leads to more losses of the antenna system performance of the terminal, that is, more antennas at the transmit end need to be allocated to the terminal to reduce a loss of an antenna system of the terminal. In this embodiment of the present invention, the preset transmission performance threshold may be 3 dB, so that an obtained maximum loss of the antenna system performance of the terminal is 1 bps/Hz.

When the transmission performance difference is not less than the preset transmission performance threshold, step S104 is to be performed, or otherwise, S105 is to be performed.

S104. Increase the reference quantity.

The increasing the reference quantity may be implemented in multiple manners, and may be implemented by using a dichotomy or a golden section method in this embodiment of the present invention, where the dichotomy is that an antenna quantity increased each time is half of a difference between a current reference quantity and a reference quantity obtained after previous increasing. When the reference quantity is increased for the first time, a reference quantity obtained after previous increasing may be equal to a quantity of all antennas at the transmit end. Optionally, an initial value in the dichotomy or the golden section method may be set according to adjustment precision or in another manner.

After the reference quantity is increased, go back to step S103 to continue to determine whether the transmission performance difference is less than the preset transmission performance threshold, until transmission performance of the terminal that is based on antennas of an increased reference quantity meets a requirement.

S105. Determine an increased reference quantity as a target quantity.

After the reference quantity is increased, when a corresponding transmission performance difference is not less than the preset transmission performance threshold, the increased reference quantity is determined as the target quantity.

Optionally, in this embodiment of this application, when a transmission performance difference corresponding to the reference quantity determined in step S102 is less than preset transmission performance, the reference quantity determined in step S102 may be directly determined as the target quantity.

S106. Allocate, at the transmit end, antennas of the target quantity to the terminal.

In this embodiment of the present invention, the target quantity of antennas means that a difference between transmission performance of the terminal that is based on antennas of the target quantity and the transmission performance of the terminal that is based on all the antennas at the transmit end is less than the preset transmission performance threshold, and the target quantity is less than the quantity of all antennas at the transmit end.

In practical application, when antennas need to be allocated to multiple terminals, the multiple terminals may be queued, and the antennas are successively allocated to the multiple terminals according to a queue sequence until the queue is empty.

According to the antenna allocation method provided in this embodiment of the present invention, antennas of a target quantity may be allocated to a terminal according to location information of the terminal, and during subsequent precoding, channel estimation may be performed directly on the allocated antennas of the target quantity. Compared with the prior art in which all channel information needs to be acquired, the antenna allocation method in which the target quantity of antennas allocated to the terminal is less than a quantity of all antennas at a transmit end may reduce channel estimation workload during precoding, and because a quantity of antennas allocated to the terminal is decreased, operation complexity during precoding may be further reduced, which further improves system performance.

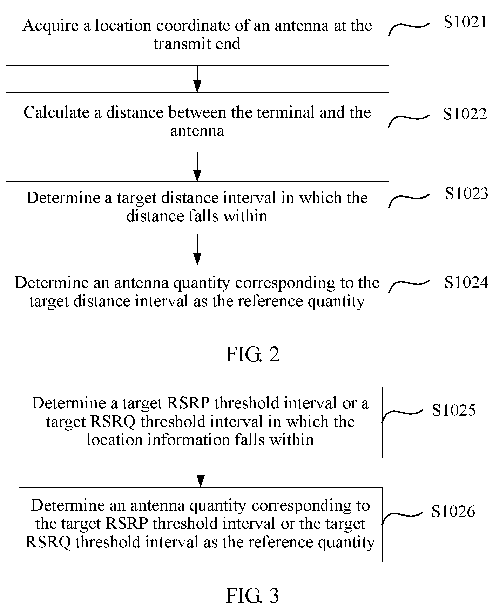

In an embodiment, when the location information is location coordinates, as shown in FIG. 2, step S102 may include:
S1021. Acquire location coordinates of an antenna at the transmit end.

The location coordinates of the antenna may be prestored, or may be acquired by using a GPS or in another positioning manner.

S1022. Calculate a distance between the terminal and the antenna.

According to the location coordinates of the antenna and the location coordinates of the terminal, the distance between the terminal and the antenna may be obtained by means of calculation by using trilateration.

S1023. Determine a target distance interval in which the distance falls within.

An area outside the antenna is pre-divided into multiple distance intervals according to distances. An antenna quantity that is corresponding to the terminal and in each distance interval is preset according to experience or in another manner, and a correspondence between a distance interval and an antenna quantity is stored. Further, after the distance between the terminal and the antenna is obtained by means of calculation, the target distance interval may be found in the prestored correspondence between a distance interval and an antenna quantity.

In another embodiment of the present invention, the terminal may further acquire the location coordinates of the antenna. The terminal calculates the distance between the terminal and the antenna and directly sends the distance obtained by means of calculation, which is used as the location information, to an antenna transmitting apparatus. Further, the antenna transmitting apparatus directly determines the target distance interval in which the distance between the terminal and the antenna falls within.

S1024. Determine an antenna quantity corresponding to the target distance interval as the reference quantity.

Because a corresponding reference quantity of antennas is preset for each distance interval, when a target distance interval in which the terminal falls within is found, a reference quantity corresponding to the terminal may be determined at the same time. In another embodiment, when the location information is RSRP or RSRQ, as shown in FIG. 3, step S102 may include:
S1025. Determine a target RSRP threshold interval or a target RSRQ threshold interval in which the location information falls within.

An RSRP threshold interval or an RSRQ threshold interval may be obtained by means of pre-division, and a quantity that is of antennas allocated to the terminal and that falls within in each RSRP threshold interval or each RSRQ threshold interval is preset according to experience or in another manner.

S1026. Determine an antenna quantity corresponding to the target RSRP threshold interval or the target RSRQ threshold interval as the reference quantity.

When a target RSRP threshold interval or a target RSRQ threshold interval in which the terminal falls within is determined according to the location information, a reference quantity of antennas that are corresponding to the terminal may be determined according to a correspondence between an RSRP threshold interval and an antenna quantity, or according to a correspondence between an RSRQ threshold interval and an antenna quantity.

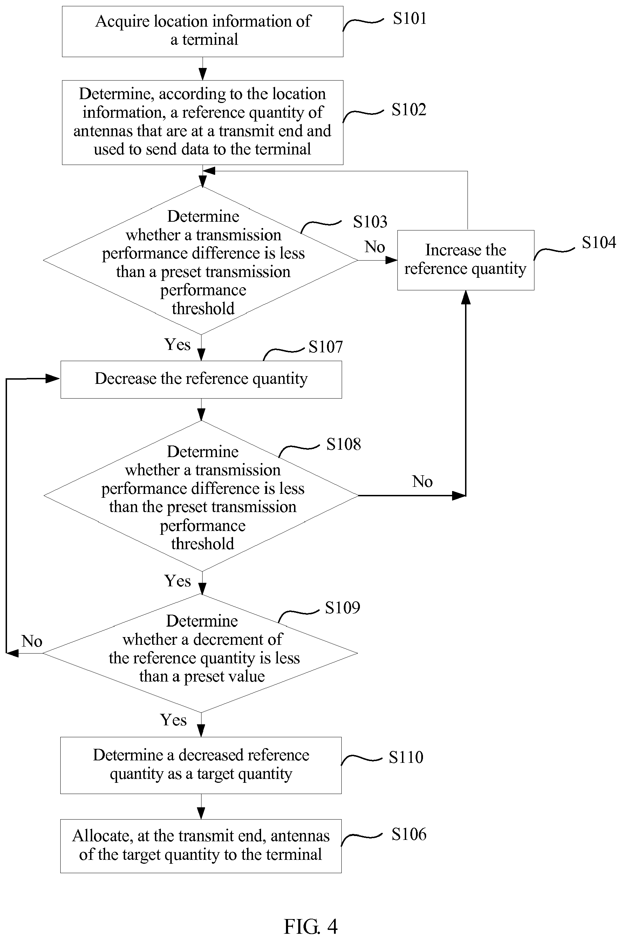

FIG. 4 is a schematic flowchart of another antenna allocation method according to an embodiment of the present invention. On the basis of the embodiment shown in FIG. 1, when it is determined that the transmission performance of the terminal that is based on the allocated antennas does not meet a preset condition, the antenna allocation method further includes the following steps:
S107. Decrease the reference quantity.

In practical application, the reference quantity of antennas allocated to the terminal directly according to experience may exceed a requirement of the terminal, or in the foregoing step S104, an antenna quantity obtained after increasing may exceed a requirement of the terminal. To reduce complexity of subsequent precoding performed by using the allocated antennas, in this case, a quantity of antennas used to send data to the terminal may be decreased.

The decreasing the reference quantity may be implemented in multiple manners, and may be implemented by using a dichotomy or a golden section method in this embodiment of the present invention, where the dichotomy is that an antenna quantity decreased each time is half of a difference between a current reference quantity and a previous reference quantity. When the reference quantity is decreased for the first time, a reference quantity obtained after previous decreasing may be equal to a quantity of all antennas at the transmit end. Optionally, an initial value in the dichotomy or the golden section method may be set according to adjustment precision or in another manner.

S108. Determine whether a transmission performance difference obtained after the reference quantity is decreased is less than the preset transmission performance threshold.

This step is the same as the foregoing step S103, and details are not described herein again.

When the transmission performance difference is not less than the preset transmission performance threshold, step S104 is to be performed again, or otherwise, S109 is to be performed.

S109. Determine whether a decrement of the reference quantity is less than a preset value.

The preset value may be freely set according to different precision requirements on the antenna system performance of the terminal. When the decrement of the reference quantity is less than the preset value, it is considered that a precision requirement on the antenna system performance of the terminal is already met, and the reference quantity does not need to be continuously decreased. That is, an error range is tolerable between the transmission performance of the terminal that is based on the allocated antennas and the transmission performance of the terminal that is based on all the antennas at the transmit end. In this embodiment of the present invention, the preset value is selected as 2.

When the decrement of the reference quantity is not less than the preset value, step S107 is to be performed again, or otherwise, S110 is to be performed.

S110. Determine a decreased reference quantity as a target quantity, and perform step S106 to complete a process of allocating an antenna to the terminal.

The following describes, by using a virtual case, the method embodiment shown in the foregoing FIG. 4.

A quantity of all antennas at the transmit end is 1000, the preset transmission performance threshold is 3 dB, the preset value is 10, and in an ideal state, the quantity of antennas allocated to the terminal is 700. In one case, when the reference quantity of antennas allocated to the terminal according to the location information is 630, the transmission performance difference is greater than 3 dB, and therefore the reference quantity needs to be increased. The reference quantity is increased by using the dichotomy, half of a difference between 630 and 1000 is used as an increment, and an increased reference quantity is 630+185=815. In this case, 815 antennas may be directly allocated to the terminal according to the method embodiment shown in FIG. 1. In addition, the reference quantity may be decreased by using the dichotomy, that is, half of a difference between 815 and 630 is used as a decrement, and a decreased reference quantity is 815-93=723. In this case, although a requirement of the preset transmission performance threshold is met, a variation does not meet a requirement of the preset value. Therefore, the reference quantity is still decreased by using the dichotomy on the basis of 733, and a decreased reference quantity is 723-47=676. It can be learned that the decreased reference quantity does not meet a requirement of the preset transmission performance threshold, the reference quantity needs to be increased again. By analogy, a reference quantity with a variation less than 10 is finally determined and is used as a final target quantity.

According to the antenna allocation method provided in this embodiment of the present invention, when a transmission performance difference is less than a preset transmission performance threshold, a reference quantity may be further adjusted again according to transmission performance of a terminal that is based on antennas, so that when the transmission performance difference is less than the preset transmission performance threshold, a quantity of antennas allocated to the terminal is decreased as much as possible, so as to save resources of an antenna system to a full extent and improve an overall capacity of the antenna system.

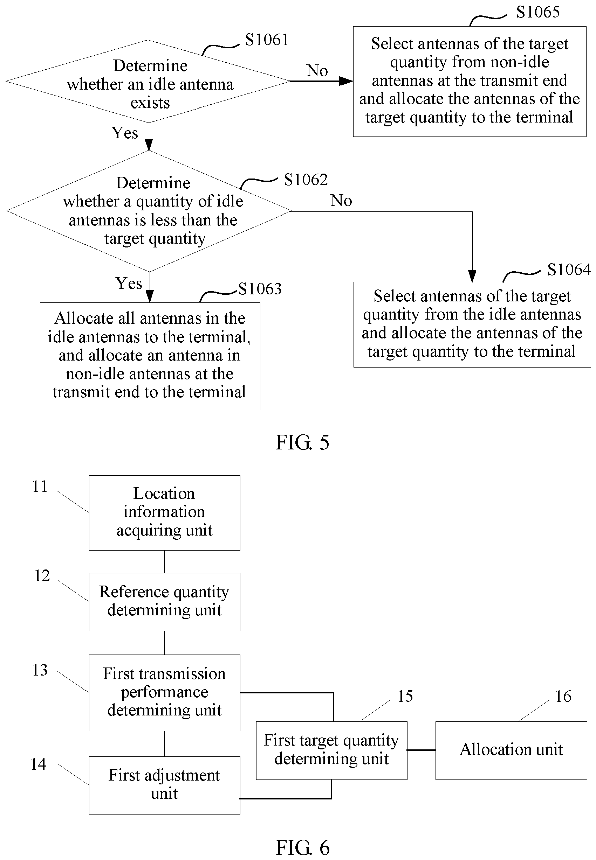

FIG. 5 is a schematic flowchart of still another antenna allocation method according to an embodiment of the present invention, and the antenna allocation method is applied to an antenna transmitting apparatus. As shown in FIG. 5, based on the foregoing embodiments, step S106 may include the following steps:
S1061. Determine whether an idle antenna exists in the antennas at the transmit end.

The idle antenna refers to an antenna that is in the antennas at the transmit end and that is not selected by another terminal. When all antennas at the transmit end are allocated to the terminal for the first time, in this case, all the antennas are idle antennas. However, if an antenna at the transmit end has already been allocated to one or more terminals, the antenna transmitting apparatus records an ID of the allocated antenna. Therefore, during determining in this step, an ID of an allocated antenna that is recorded in the antenna transmitting apparatus may be directly acquired to determine whether an idle antenna exists at the transmit end.

When an idle antenna exists, S1062 is to be performed; when no idle antenna exists, S1065 is to be performed.

S1062. Determine whether a quantity of idle antennas is less than the target quantity. When the quantity of idle antennas is less than the target quantity, S1063 is to be performed; otherwise, S1064 is to be performed.

S1063. Allocate all antennas in the idle antennas to the terminal, and allocate an antenna in non-idle antennas at the transmit end to the terminal.

The sum of the quantity of idle antennas and a quantity of non-idle antennas allocated to the terminal is equal to the target quantity.

S1064. Select antennas of the target quantity from the idle antennas and allocate the antennas of the target quantity to the terminal.

S1065. Select antennas of the target quantity from non-idle antennas at the transmit end and allocate the antennas of the target quantity to the terminal.

Regardless of whether an idle antenna or a non-idle antenna is allocated to the terminal, or both an idle antenna and a non-idle antenna are allocated, after allocation, a quantity of antennas used to send data to the terminal is equal to the target quantity.

In this embodiment of the present invention, when idle antennas or non-idle antennas are allocated to the terminal, IDs of antennas allocated to the terminal may be consecutive or nonconsecutive. In addition, in an allocation process, a circular allocation manner may also be used, that is, it is considered that the last antenna ID and the first antenna ID are consecutive. For example, a total quantity of antennas is 1000, antennas that have been allocated to other terminals are {1, ..., 600}. During allocation in step S405, {601, ..., 1000, 1, ..., 400} may be allocated to the terminal, where {601, ..., 1000} are idle antennas, and {1, ..., 400} are non-idle antennas.

In addition, in this embodiment of the present invention, when the quantity of idle antennas is not less than the target quantity, an antenna to-be-allocated to the terminal may be preferentially increased in the idle antennas, and when the quantity of idle antennas is less than the target quantity, an antenna to-be-allocated to the terminal may be preferentially decreased in the non-idle antennas, so as to ensure as far as possible that idle antennas are allocated to the terminal for using.

According to the antenna allocation method provided in this embodiment of the present invention, when an antenna is being allocated to a terminal, by analyzing a to-be-allocated antenna, an idle antenna that is not allocated to another terminal is preferentially allocated, and then an idle antenna that has been allocated to another terminal is allocated. Regardless of which manner, it is ensured to allocate antennas of a target quantity to the terminal. In this allocation manner, an idle antenna is preferentially allocated, so that antenna resources can be properly used, and quality of a signal sent to the terminal is improved. A non-idle antenna is allocated after an idle antenna is allocated, so that antennas allocated to different terminals can overlap, antenna resources are used to a full extent, and a capacity of an antenna system is improved.

Based on the descriptions of the foregoing method embodiments, a person skilled in the art may clearly understand that the present invention may be implemented by software in addition to a necessary universal hardware platform or by hardware only. In most circumstances, the former is a preferred implementation manner. Based on such an understanding, the technical solutions of the present invention essentially or the part contributing to the prior art may be implemented in a form of a software product. The computer software product is stored in a storage medium, and includes several instructions for instructing a computer device (which may be a personal computer, a server, a network device, or the like) to perform all or some of the steps of the methods in the embodiments of the present invention. The foregoing storage medium includes: any medium that can store program code, such as a read-only memory (ROM), a random access memory (RAM), a magnetic disk, or an optical disc.

FIG. 6 is a schematic structural diagram of an antenna allocation apparatus according to an embodiment of the present invention. The antenna allocation apparatus is applied to an antenna system, and as shown in FIG. 6, may include:
a location information acquiring unit 11, configured to acquire location information of a terminal;
a reference quantity determining unit 12, configured to determine, according to the location information, a reference quantity of antennas used to send data to the terminal;
a first transmission performance determining unit 13, configured to determine whether a transmission performance difference is less than a preset transmission performance threshold, where the transmission performance difference is a difference between transmission performance of the terminal that is based on antennas of the reference quantity and transmission performance of the terminal that is based on all antennas at a transmit end;
a first adjustment unit 14, configured to: when the transmission performance difference is not less than the preset transmission performance threshold, increase the reference quantity, where increasing the reference quantity may be implemented in multiple manners, and may be implemented by using a dichotomy or a golden section method in this embodiment of the present invention, where the dichotomy is that an antenna quantity increased each time is half of a difference between a current reference quantity and a reference quantity obtained after previous increasing; when the reference quantity is increased for the first time, a reference quantity obtained after previous increasing may be equal to a quantity of all antennas at the transmit end; optionally, an initial value in the dichotomy may be set according to adjustment precision or in another manner, where
in addition, the first transmission performance determining unit 13 is further configured to determine whether a transmission performance difference obtained after the reference quantity is increased is less than the preset transmission performance threshold;
a first target quantity determining unit 15, configured to: when the transmission performance difference is less than the preset transmission performance threshold, determine an increased reference quantity as a target quantity; and
an allocation unit 16, configured to allocate, at the transmit end, antennas of the target quantity to the terminal, where a difference between transmission performance of the terminal that is based on the antennas of the target quantity and the transmission performance of the terminal that is based on all the antennas at the transmit end is less than the preset transmission performance threshold.

The apparatus may reduce channel estimation workload during precoding, and because a quantity of antennas allocated to a terminal is decreased, operation complexity during precoding may be further reduced, which further improves system performance.

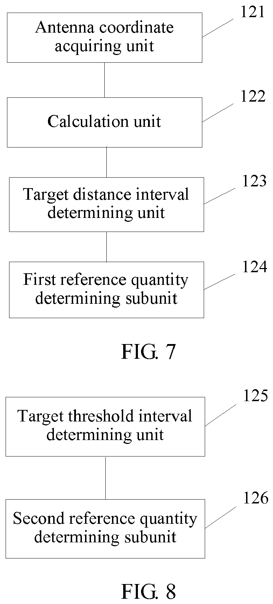

In an embodiment of the present invention, when the location information is location coordinates, as shown in FIG. 7, the reference quantity determining unit 12 may include:
an antenna coordinates acquiring unit 121, configured to acquire location coordinates of an antenna at the transmit end;
a calculation unit 122, configured to calculate a distance between the terminal and the antenna according to the location coordinates of the antenna and the location coordinates of the terminal;
a target distance interval determining unit 123, configured to determine a target distance interval in which the distance falls within; and
a first reference quantity determining subunit 124, configured to determine, according to a correspondence between a distance interval and an antenna quantity, an antenna quantity corresponding to the target distance interval as the reference quantity.

In another embodiment of the present invention, the terminal may further acquire the location coordinates of the antenna; the terminal calculates the distance between the terminal and the antenna, and directly sends the distance obtained by means of calculation, which is used as the location information, to the antenna. Further, the target distance interval determining unit 123 directly determines the target distance interval in which the distance between the terminal and the antenna falls within.

In another embodiment of the present invention, when the location information is RSRP or RSRQ, as shown in FIG. 8, the reference quantity determining unit 12 may include:
a target threshold interval determining unit 125, configured to determine a target RSRP threshold interval or a target RSRQ threshold interval in which the location information falls within; and
a second reference quantity determining subunit 126, configured to determine, according to a correspondence between an RSRP threshold interval and an antenna quantity or a correspondence between an RSRQ threshold interval and an antenna quantity, an antenna quantity corresponding to the target RSRP threshold interval or the target RSRQ threshold interval as the reference quantity.

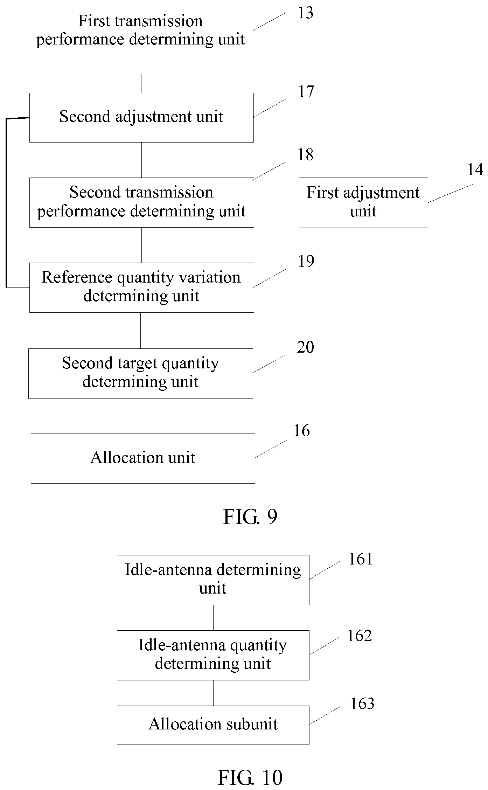

FIG. 9 is a schematic structural diagram of another antenna allocation apparatus according to an embodiment of the present invention. As shown in FIG. 9, on the basis of the embodiment shown in FIG. 8, the antenna allocation apparatus may further include:
a second adjustment unit 17, connected to the first transmission performance determining unit 13 and configured to: when the transmission performance difference is less than the preset transmission performance threshold, decrease the reference quantity, where decreasing the reference quantity may be implemented in multiple manners, and may be implemented by using a dichotomy or a golden section method in this embodiment of the present invention, where the dichotomy is that an antenna quantity decreased each time is half of a difference between a current reference quantity and a previous reference quantity; when the reference quantity is decreased for the first time, a reference quantity obtained after previous decreasing may be equal to a quantity of all antennas at a transmit end; optionally, an initial value in the dichotomy may be set according to adjustment precision or in another manner;
a second transmission performance determining unit 18, configured to determine whether a transmission performance difference obtained after the reference quantity is decreased is less than the preset transmission performance threshold, where
the first adjustment unit 14 is further configured to: when the transmission performance difference obtained after the reference quantity is decreased is not less than the preset transmission performance threshold, increase the reference quantity;
a reference quantity variation determining unit 19, configured to: when the transmission performance difference obtained after the reference quantity is decreased is less than the preset transmission performance threshold, determine whether a decrement of the reference quantity is less than a preset value, where
the second adjustment unit 17 is further configured to: when the decrement of the reference quantity is not less than the preset value, decrease the reference quantity; and
a second target quantity determining unit 20, configured to: when the decrement of the reference quantity is less than the preset value, determine a decreased reference quantity as the target quantity.

After the apparatus determines a reference quantity of antennas that send data to a terminal, when a transmission performance difference is less than a preset transmission performance threshold, the reference quantity may be further adjusted again according to transmission performance of the terminal that is based on antennas, so that when the transmission performance difference is less than the preset transmission performance threshold, a quantity of antennas allocated to the terminal is decreased as much as possible, so as to save resources of an antenna system to a full extent and improve an overall capacity of the antenna system.

FIG. 10 is a schematic structural diagram of still another antenna allocation apparatus according to an embodiment of the present invention. As shown in FIG. 10, in this embodiment of the present invention, the allocation unit 16 may include:
an idle-antenna determining unit 161, configured to determine whether an idle antenna exists;
an idle-antenna quantity determining unit 162, configured to: when an idle antenna exists, determine whether a quantity of idle antennas is less than the target quantity; and
an allocation subunit 163, when the quantity of idle antennas is not less than the target quantity, selecting antennas of the target quantity from the idle antennas and allocating the antennas of the target quantity to the terminal;
when the quantity of idle antennas is less than the target quantity, allocate all antennas in the idle antennas to the terminal, and allocate an antenna in non-idle antennas at the transmit end to the terminal, where a sum of the quantity of idle antennas and a quantity of non-idle antennas allocated to the terminal is equal to the target quantity; or
when no idle antenna exists, select antennas of the target quantity from non-idle antennas at the transmit end and allocate the antennas of the target quantity to the terminal.

In this embodiment of the present invention, when the quantity of idle antennas is not less than the target quantity, a quantity of antennas to-be-allocated to the terminal may be preferentially increased in the idle antennas, and when the quantity of idle antennas is less than the target quantity, a quantity of antennas to-be-allocated to the terminal may be preferentially decreased in the non-idle antennas, so as to ensure as far as possible that idle antennas are allocated to the terminal for using.

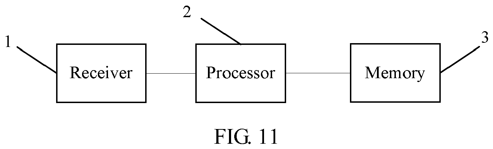

When allocating an antenna, the apparatus preferentially allocates an idle antenna that is not allocated to another terminal, and then allocates an idle antenna that has been allocated to another terminal. In this allocation manner, on one hand, antenna resources may be properly used, and quality of a signal sent to a terminal is improved; on the other hand, antennas allocated to different terminals may overlap, antenna resources are used to a full extent, and a capacity of an antenna system is improved. FIG. 11 is a schematic structural diagram of an antenna allocation apparatus according to an embodiment of the present invention. The antenna allocation apparatus is applied to an antenna system, and as shown in FIG. 11, the antenna allocation apparatus includes a receiver 1, a processor 2, and a memory 3, where:
the receiver 1 is configured to receive acquired location information of a terminal; and
the processor 2 is configured to execute the following programs: determine, according to the location information, a reference quantity of antennas that are at a transmit end and used to send data to the terminal; determine whether a transmission performance difference is less than a preset transmission performance threshold, where the transmission performance difference is a difference between transmission performance of the terminal that is based on antennas of the reference quantity and transmission performance of the terminal that is based on all antennas at the transmit end; when the transmission performance difference is not less than the preset transmission performance threshold, increase the reference quantity, and perform again the step of determining whether a transmission performance difference is less than a preset transmission performance threshold, until the transmission performance difference is less than the preset transmission performance threshold; and when the transmission performance difference is less than the preset transmission performance threshold, allocate, at the transmit end, antennas of an increased reference quantity to the terminal.

Optionally, in this embodiment of the present invention, the processor 2 may further perform a program corresponding to the antenna allocation method in any one of the embodiments described in the foregoing FIG. 2 to FIG. 5.

In addition, referring to the apparatus embodiments described in the foregoing FIG. 6 to FIG. 10, the receiver 1 may perform a step performed by the location information acquiring unit 11; the processor 2 may perform steps performed by the reference quantity determining unit 12, the first transmission performance determining unit 13, the first adjustment unit 14, the allocation unit 16, the second adjustment unit 17, the second transmission performance determining unit 18, the reference quantity variation determining unit 19, and the second target quantity determining unit 20; and the memory 3 may store a correspondence between a location area and a reference quantity of antennas, and store the transmission performance threshold, the preset value, and the like mentioned in the foregoing embodiments.

It is understandable that the present invention may be applicable to environments or configurations of multiple universal or dedicated computing systems. For example, a personal computer, a server computer, a handheld device or a portable device, a flat panel device, a multi-processor system, a microprocessor-based system, a set-top box, a network PC, a minicomputer, a mainframe computer, and a distributed computing environment including any one of the foregoing system or device.

The present invention can be described in the general context of executable computer instructions executed by a computer, for example, a program module. Generally, the program module includes a routine, program, object, component, data structure, and the like for executing a particular task or implementing a particular abstract data type. The present invention may also be practiced in distributed computing environments in which tasks are performed by remote processing devices that are connected through a communications network. In a distributed computing environment, program modules may be located in both local and remote computer storage media including storage devices.

It should be noted that in this specification, relational terms such as first and second are only used to distinguish one entity or operation from another, and do not necessarily require or imply that any actual relationship or sequence exists between these entities or operations. Moreover, the terms "include", "include", or their any other variant is intended to cover a non-exclusive inclusion, so that a process, a method, an article, or an apparatus that includes a list of elements not only includes those elements but also includes other elements which are not expressly listed, or further includes elements inherent to such process, method, article, or apparatus. An element preceded by "includes a ..." does not, without more constraints, preclude the existence of additional identical elements in the process, method, article, or apparatus that includes the element.

## Claims

1. An antenna allocation method, comprising:
acquiring location information of a terminal;
determining, according to the location information, a reference quantity of antennas that are at a transmit end and used to send data to the terminal;
determining whether a transmission performance difference is less than a preset transmission performance threshold, wherein the transmission performance difference is a difference between transmission performance of the terminal that is based on antennas of the reference quantity and transmission performance of the terminal that is based on all antennas at the transmit end;
when the transmission performance difference is not less than the preset transmission performance threshold, increasing the reference quantity, and performing again the step of determining whether a transmission performance difference is less than a preset transmission performance threshold, until the transmission performance difference is less than the preset transmission performance threshold; and
when the transmission performance difference is less than the preset transmission performance threshold,
decreasing the reference quantity;
determining whether a transmission performance difference obtained after the reference quantity is decreased is less than the preset transmission performance threshold;
when the transmission performance difference obtained after the reference quantity is decreased is not less than the preset transmission performance threshold, performing again the step of increasing the reference quantity; and when the transmission performance difference obtained after the reference quantity is decreased is less than the preset transmission performance threshold, determining whether a decrement of the reference quantity is less than a preset value; and
when the decrement of the reference quantity is not less than the preset value, performing again the step of decreasing the reference quantity, until the decrement of the reference quantity is less than the preset value; and when the decrement of the reference quantity is less than the preset value, determining the decreased reference quantity as an target quantity;
and
allocating, at the transmit end, antennas of the target quantity to the terminal.

2. The method according to claim 1, wherein the location information comprises: location coordinates; and
the determining, according to the location information, a reference quantity of antennas that are at a transmit end and used to send data to the terminal comprises:
acquiring location coordinates of an antenna at the transmit end;
calculating a distance between the terminal and the antenna according to the location coordinates of the antenna and the location coordinates of the terminal;
determining a target distance interval in which the distance falls within; and
determining, according to a correspondence between a distance interval and an antenna quantity, an antenna quantity corresponding to the target distance interval as the reference quantity.

3. The method according to claim 1, wherein the location information comprises: reference signal received quality, RSRQ, and/or reference signal received power, RSRP; and
the determining, according to the location information, a reference quantity of antennas that are at a transmit end and used to send data to the terminal comprises:
determining a target RSRP threshold interval or a target RSRQ threshold interval in which the location information falls within; and
determining, according to a correspondence between an RSRP threshold interval and an antenna quantity or a correspondence between an RSRQ threshold interval and an antenna quantity, an antenna quantity corresponding to the target RSRP threshold interval or the target RSRQ threshold interval as the reference quantity.

4. The method according to claim 1, wherein the reference quantity is increased by using a dichotomy or a golden section method; and/or
the reference quantity is decreased by using the dichotomy or the golden section method.

5. The method according to any one of claims 1 to 4, wherein the allocating, at the transmit end, antennas of the target quantity to the terminal comprises:
determining whether an idle antenna exists in the antennas at the transmit end;
when an idle antenna exists, determining whether a quantity of idle antennas is less than the target quantity; and
when the quantity of idle antennas is not less than the target quantity, selecting antennas of the target quantity from the idle antennas and allocating the antennas of the target quantity to the terminal; or when the quantity of idle antennas is less than the target quantity, allocating all antennas in the idle antennas to the terminal, and allocating an antenna in non-idle antennas at the transmit end to the terminal, wherein a sum of the quantity of idle antennas and a quantity of non-idle antennas allocated to the terminal is equal to the target quantity; or
when no idle antenna exists, selecting antennas of the target quantity from non-idle antennas at the transmit end and allocating the antennas of the target quantity to the terminal.

6. An antenna allocation apparatus, comprising:
a location information acquiring unit, configured to acquire location information of a terminal;
a reference quantity determining unit, configured to determine, according to the location information, a reference quantity of antennas used to send data to the terminal;
a first transmission performance determining unit, configured to determine whether a transmission performance difference is less than a preset transmission performance threshold, wherein the transmission performance difference is a difference between transmission performance of the terminal that is based on antennas of the reference quantity and transmission performance of the terminal that is based on all antennas at a transmit end;
a first adjustment unit, configured to: when the transmission performance difference is not less than the preset transmission performance threshold, increase the reference quantity until the transmission performance difference is less than the preset transmission performance threshold, wherein
the first transmission performance determining unit is further configured to determine whether a transmission performance difference obtained after the reference quantity is increased is less than the preset transmission performance threshold;
a second adjustment unit, configured to: when the transmission performance difference is less than the preset transmission performance threshold, decrease the reference quantity;
a second transmission performance determining unit, configured to determine whether a transmission performance difference obtained after the reference quantity is decreased is less than the preset transmission performance threshold, wherein
the first adjustment unit is further configured to: when the transmission performance difference obtained after the reference quantity is decreased is not less than the preset transmission performance threshold, increase the reference quantity until the transmission performance difference is less than the preset transmission performance threshold;
a reference quantity variation determining unit, configured to: when the transmission performance difference obtained after the reference quantity is decreased is less than the preset transmission performance threshold, determine whether a decrement of the reference quantity is less than a preset value, wherein
the second adjustment unit is further configured to: when the decrement of the reference quantity is not less than the preset value, decrease the reference quantity until the decrement of the reference quantity is less than the preset value; and
a second target quantity determining unit, configured to: when the decrement of the reference quantity is less than the preset value, determine the decreased reference quantity as an target quantity, and
an allocation unit, configured to allocate, at the transmit end, antennas of the target quantity to the terminal.

7. The apparatus according to claim 6, wherein the location information comprises location coordinates; and the reference quantity determining unit comprises:
an antenna coordinates acquiring unit, configured to acquire location coordinates of an antenna at the transmit end;
a calculation unit, configured to calculate a distance between the terminal and the antenna according to the location coordinates of the antenna and the location coordinates of the terminal;
a target distance interval determining unit, configured to determine a target distance interval in which the distance falls within; and
a first reference quantity determining subunit, configured to determine, according to a correspondence between a distance interval and an antenna quantity, an antenna quantity corresponding to the target distance interval as the reference quantity.

8. The apparatus according to claim 6, wherein the location information comprises reference signal received quality, RSRQ, and/or reference signal received power, RSRP; and the reference quantity determining unit comprises:
a target threshold interval determining unit, configured to determine a target RSRP threshold interval or a target RSRQ threshold interval in which the location information falls within; and
a second reference quantity determining subunit, configured to determine, according to a correspondence between an RSRP threshold interval and an antenna quantity or a correspondence between an RSRQ threshold interval and an antenna quantity, an antenna quantity corresponding to the target RSRP threshold interval or the target RSRQ threshold interval as the reference quantity.

9. The apparatus according to claim 8, wherein the allocation unit comprises:
an idle-antenna determining unit, configured to determine whether an idle antenna exists;
an idle-antenna quantity determining unit, configured to: when an idle antenna exists, determine whether a quantity of idle antennas is less than the target quantity; and
an allocation subunit, configured to: when the quantity of idle antennas is not less than the target quantity, select antennas of the target quantity from the idle antennas and allocate the antennas of the target quantity to the terminal;
when the quantity of idle antennas is less than the target quantity, allocate all antennas in the idle antennas to the terminal, and allocate an antenna in non-idle antennas at the transmit end to the terminal, wherein a sum of the quantity of idle antennas and a quantity of non-idle antennas allocated to the terminal is equal to the target quantity; or
when no idle antenna exists, select antennas of the target quantity from non-idle antennas at the transmit end and allocate the antennas of the target quantity to the terminal.

## Patentansprüche

1. Antennenzuweisungsverfahren, aufweisend:
Erfassen von Lageinformationen eines Terminals;
Bestimmen, gemäß der Lageinformationen, einer Referenzmenge an Antennen, die sich an einem Senderausgang befinden, und verwendet werden, um Daten an das Endgerät zu senden;
Bestimmen, ob eine Übertragungsleistungsdifferenz kleiner ist als ein voreingestellter Übertragungsleistungsschwellenwert, wobei die Übertragungsleistungsdifferenz eine Differenz zwischen der Übertragungsleistung des Endgeräts, die auf Antennen der Referenzmenge basiert, und einer Übertragungsleistung des Endgeräts, die auf allen Antennen am Senderausgang basiert, ist;
wenn die Übertragungsleistungsdifferenz nicht kleiner als der voreingestellte Übertragungsleistungsschwellenwert ist, Erhöhen der Referenzmenge und erneutes Durchführen des Schritts zum Bestimmen, ob eine Übertragungsleistungsdifferenz kleiner als ein voreingestellter Übertragungsleistungsschwellenwert ist, bis die Übertragungsleistungsdifferenz kleiner als der voreingestellter Schwellenwert für die Übertragungsleistung ist; und
wenn die Übertragungsleistungsdifferenz kleiner als ein voreingestellter Übertragungsleistungsschwellenwert ist,
Verringern der Referenzmenge;
Bestimmen, ob eine Übertragungsleistungsdifferenz, die erhalten wird, nachdem die Referenzmenge verringert wurde, kleiner als der voreingestellte Übertragungsleistungsschwellenwert ist;
wenn die Übertragungsleistungsdifferenz, die erhalten wird, nachdem die Referenzmenge verringert wurde, nicht kleiner ist als der voreingestellte Übertragungsleistungsschwellenwert, erneutes Durchführen des Schritts zum Erhöhen der Referenzmenge; und wenn die Übertragungsleistungsdifferenz, die erhalten wird, nachdem die Referenzmenge verringert wurde, kleiner als der voreingestellte Übertragungsleistungsschwellenwert ist, Bestimmen, ob eine Abnahme der Referenzmenge kleiner als ein voreingestellter Wert ist; und
wenn die Abnahme der Referenzmenge nicht kleiner als der voreingestellte Wert ist, erneutes Durchführen des Schritts zum Verringern der Referenzmenge, bis die Abnahme der Referenzmenge kleiner als der voreingestellte Wert ist; und wenn die Abnahme der Referenzmenge kleiner ist als der voreingestellte Wert, Bestimmen der verringerten Referenzmenge als Zielmenge; und
Zuweisen, am Senderausgang, von Antennen der Zielmenge an das Endgerät.

2. Verfahren nach Anspruch 1, wobei die Lageinformationen Lagekoordinaten aufweisen; und
das Bestimmen, gemäß der Lageinformationen, einer Referenzmenge an Antennen, die sich an einem Senderausgang befinden, und verwendet werden, um Daten an das Endgerät zu senden, aufweist:
Erfassen von Lagekoordinaten einer Antenne am Senderausgang;
Berechnen einer Entfernung zwischen dem Endgerät und der Antenne gemäß den Lagekoordinaten der Antenne und den Lagekoordinaten des Endgeräts;
Bestimmen eines Zielentfernungsintervalls, in dem die Entfernung liegt; und
Bestimmen, gemäß einer Entsprechung zwischen einem Entfernungsintervall und einer Antennenmenge, einer Antennenmenge, die dem Zielentfernungsintervall entspricht, als der Referenzmenge.

3. Verfahren nach Anspruch 1, wobei die Lageinformationen aufweisen:
Referenz-Signal der Empfangsqualität (Reference Signal Received Quality) RSRQ und/oder Referenzsignal des Empfangspegels (Reference Signal Received Power) RSRP; und
das Bestimmen, gemäß der Lageinformationen, einer Referenzmenge an Antennen, die sich an einem Senderausgang befinden, und verwendet werden, um Daten an das Endgerät zu senden, aufweist:
Bestimmen eines Ziel-RSRP-Schwellenwertintervalls oder eines Ziel-RSRQ-Schwellenwertintervalls, in dem die Lageinformationen liegen; und
Bestimmen, gemäß einer Entsprechung zwischen einem RSRP-Schwellenwertintervall und einer Antennenmenge oder einer Entsprechung zwischen einem RSRQ-Schwellenwertintervall und einer Antennenmenge, einer Antennemenge, die dem Ziel-RSRP-Schwellenwertintervall oder dem Ziel-RSRQ-Schwellenwertintervall entspricht, als der Referenzmenge.

4. Verfahren nach Anspruch 1, wobei die Referenzmenge unter Verwendung eines Dichotomie- oder eines Goldener-Schnitt-Verfahrens erhöht wird; und/oder die Referenzmenge unter Verwendung des Dichotomie- oder des Goldener-Schnitt-Verfahrens verringert wird.

5. Verfahren nach einem der Ansprüche 1 bis 4, wobei das Zuweisen, am Senderausgang, von Antennen der Zielmenge an das Endgerät aufweist:
Bestimmen, ob eine freie Antenne aus den Antennen am Senderausgang vorhanden ist;
wenn eine freie Antenne vorhanden ist, Bestimmen ob eine Menge an freien Antennen kleiner als die Zielmenge ist; und
wenn die Menge der freien Antennen nicht kleiner als die Zielmenge ist, Auswählen von Antennen der Zielmenge aus den freien Antennen und Zuweisen der Antennen der Zielmenge an das Endgerät; oder wenn die Menge an freien Antennen kleiner als die Zielmenge ist, Zuweisen aller Antennen aus den freien Antennen an das Endgerät, und Zuweisen einer Antenne aus den nicht freien Antennen am Senderausgang an das Endgerät, wobei eine Summe der Menge an freien Antennen und einer Menge an nicht freien Antennen, die dem Endgerät zugewiesen werden, gleich der Zielmenge ist; oder
wenn keine freie Antenne vorhanden ist, Auswählen von Antennen der Zielgröße aus nicht freien Antennen am Senderausgang und Zuweisen der Antennen der Zielgröße an das Endgerät.

6. Antennenzuweisungsvorrichtung, aufweisend:
eine Lageinformationserfassungseinheit, die eingerichtet ist, um Lageinformationen eines Endgeräts zu erfassen;
eine Referenzmengen-Bestimmungseinheit, die eingerichtet ist, um, entsprechend der Lageinformationen, eine Referenzmenge an Antennen zu bestimmen, die verwendet werden, um Daten an das Endgerät zu senden;
eine erste Übertragungsleistungsbestimmungseinheit, die eingerichtet ist, um zu bestimmen, ob eine Übertragungsleistungsdifferenz kleiner als ein voreingestellter Übertragungsleistungsschwellenwert ist, wobei die Übertragungsleistungsdifferenz eine Differenz zwischen der Übertragungsleistung des Endgeräts, die auf Antennen der Referenzmenge basiert, und einer Übertragungsleistung des Endgeräts, die auf allen Antennen am Senderausgang basiert, ist;
eine erste Einstelleinheit, die eingerichtet ist, um: wenn die Übertragungsleistungsdifferenz nicht kleiner als der voreingestellte Übertragungsleistungsschwellenwert ist, die Referenzmenge zu erhöhen, bis die Übertragungsleistungsdifferenz kleiner als der voreingestellte Übertragungsleistungsschwellenwert ist, wobei
die erste Übertragungsleistungsbestimmungseinheit ferner eingerichtet ist, um zu bestimmen, ob eine Übertragungsleistungsdifferenz, die erhalten wird, nachdem die Referenzmenge erhöht wurde, kleiner als der voreingestellte Übertragungsleistungsschwellenwert ist;
eine zweite Einstelleinheit, die eingerichtet ist, um: wenn die Übertragungsleistungsdifferenz kleiner als der voreingestellte Übertragungsleistungsschwellenwert ist, die Referenzmenge zu verringern;
eine zweite Übertragungsleistungsbestimmungseinheit, die eingerichtet ist, um zu bestimmen, ob eine Übertragungsleistungsdifferenz, die erhalten wird, nachdem die Referenzmenge verringert wurde, kleiner als der voreingestellte Übertragungsleistungsschwellenwert ist, wobei
die erste Einstelleinheit ferner eingerichtet ist, um: wenn die Übertragungsleistungsdifferenz, die erhalten wird, nachdem die Referenzmenge verringert wurde, nicht kleiner als der voreingestellte Übertragungsleistungsschwellenwert ist, die Referenzmenge zu erhöhen, bis die Übertragungsleistungsdifferenz kleiner als der voreingestellte Übertragungsleistungsschwellenwert ist;
eine Referenzmengenvariationsbestimmungseinheit, die eingerichtet ist um: wenn die Übertragungsleistungsdifferenz, die erhalten wird, nachdem die Referenzmenge verringert wurde, kleiner als der voreingestellte Übertragungsleistungsschwellenwert ist, zu bestimmen, ob eine Abnahme der Referenzmenge kleiner als ein voreingestellter Wert ist, wobei
die zweite Einstelleinheit ferner eingerichtet ist, um: wenn die Abnahme der Referenzmenge nicht kleiner als der voreingestellte Wert ist, die Referenzmenge zu verringern, bis die Abnahme der Referenzmenge kleiner als der voreingestellte Wert ist; und
eine zweite Zielmengen-Bestimmungseinheit, die eingerichtet ist um: wenn die Abnahme der Referenzmenge kleiner ist als der voreingestellte Wert, eine verringerte Referenzmenge als Zielmenge zu bestimmen, und
eine Zuweisungseinheit, die eingerichtet ist, um am Senderausgang Antennen der Zielmenge an das Endgerät zuzuweisen.

7. Vorrichtung nach Anspruch 6, wobei die Zuweisungseinheit Lagekoordinaten aufweist; und die Referenzmengen-Bestimmungseinheit aufweist:
eine Antennenkoordinaten-Erfassungseinheit, die eingerichtet ist, um Lagekoordinaten einer Antenne am Senderausgang zu erfassen;
eine Berechnungseinheit, die eingerichtet ist, um eine Entfernung zwischen dem Endgerät und der Antenne gemäß den Lagekoordinaten der Antenne und den Lagekoordinaten des Endgeräts zu berechnen;
eine Zielentfernungsintervall-Bestimmungseinheit, die eingerichtet ist, um ein Zielentfernungsintervall zu bestimmen, in dem die Entfernung liegt; und
eine erste Referenzmengen-Bestimmungsuntereinheit, die eingerichtet ist, um gemäß einer Entsprechung zwischen einem Entfernungsintervall und einer Antennenmenge, eine Antennenmenge, die dem Zielentfernungsintervall entspricht, als die Referenzmenge zu bestimmen.

8. Vorrichtung nach Anspruch 6, wobei die Lageinformationen das Referenzsignal der Empfangsqualität, RSRQ, und/oder das Referenzsignal des Empfangspegels, RSRP aufweist; und die Referenzmengen-Bestimmungseinheit aufweist:
eine Zielschwellenwertintervall-Bestimmungseinheit, die eingerichtet ist, um ein Ziel-RSRP-Schwellenwertintervall oder ein Ziel-RSRQ-Schwellenwertintervall zu bestimmen, in dem die Lageinformationen liegen; und
eine zweite Referenzmengenbestimmungsuntereinheit, die eingerichtet ist, um gemäß einer Entsprechung zwischen einem RSRP-Schwellenwertintervall und einer Antennenmenge oder einer Entsprechung zwischen einem RSRQ-Schwellenwertintervall und einer Antennenmenge, eine Antennenmenge, die dem Ziel-RSRP-Schwellenwertintervall oder dem Ziel-RSRQ-Schwellenwertintervall entspricht, als die Referenzmenge zu bestimmen.

9. Vorrichtung nach Anspruch 8, wobei die Zuweisungsformationen aufweisen:
eine Freie-Antennen-Bestimmungseinheit, die eingerichtet ist, um zu bestimmen, ob eine freie Antenne vorhanden ist;
eine Freie-Antennenmengen-Bestimmungseinheit, die eingerichtet ist um: wenn eine freie Antenne vorhanden ist, zu bestimmen, ob eine Menge an freien Antennen kleiner als die Zielmenge ist; und
eine Zuweisungsuntereinheit, die eingerichtet ist um: wenn die Menge der freien Antennen nicht kleiner als die Zielmenge ist, Antennen der Zielmenge aus den freien Antennen auszuwählen und die Antennen der Zielmenge an das Endgerät zuzuweisen;
wenn die Menge der freien Antennen kleiner als die Zielmenge ist, alle Antennen aus den freien Antennen an das Endgerät zuzuweisen und eine Antenne aus den nicht freien Antennen am Senderausgang an das Endgerät zuzuweisen, wobei eine Summe der Menge an freien Antennen und einer Menge an nicht freien Antennen, die dem Endgerät zugewiesen werden, gleich der Zielmenge ist; oder
wenn keine freie Antenne vorhanden ist, Antennen der Zielgröße aus nicht freien Antennen am Senderausgang ausgewählt werden und die Antennen der Zielgröße an das Endgerät zugewiesen werden.

## Revendications

1. Procédé d'attribution d'antennes, comprenant :
l'acquisition d'informations de position d'un terminal ;
la détermination, en fonction des informations de position, d'une quantité de référence d'antennes qui se trouvent à une extrémité de transmission et qui sont utilisées pour envoyer des données au terminal ;
la détermination qu'une différence de performance de transmission est inférieure ou non à un seuil de performance de transmission prédéfini, dans lequel la différence de performance de transmission est une différence entre une performance de transmission du terminal qui est basée sur des antennes de la quantité de référence et la performance de transmission du terminal qui est basée sur toutes les antennes à l'extrémité de transmission ; quand la différence de performance de transmission n'est pas inférieure au seuil de performance de transmission prédéfini, l'augmentation de la quantité de référence, et l'exécution à nouveau de l'étape de détermination qu'une différence de performance de transmission est inférieure ou non à un seuil de performance de transmission prédéfini, jusqu'à ce que la différence de performance de transmission soit inférieure au seuil de performance de transmission prédéfini ; et
quand la différence de performance de transmission est inférieure au seuil de performance de transmission prédéfini,
la diminution de la quantité de référence ;
la détermination qu'une différence de performance de transmission obtenue après la diminution de la quantité de référence est inférieure ou non au seuil de performance de transmission prédéfini ;
quand la différence de performance de transmission obtenue après la diminution de la quantité de référence n'est pas inférieure au seuil de performance de transmission prédéfini, l'exécution à nouveau de l'étape d'augmentation de la quantité de référence ; et quand la différence de performance de transmission obtenue après la diminution de la quantité de référence est inférieure au seuil de performance de transmission prédéfini, la détermination qu'une décrémentation de la quantité de référence est inférieure ou non à une valeur prédéfinie ; et
quand la décrémentation de la quantité de référence n'est pas inférieure à la valeur prédéfinie, l'exécution à nouveau de l'étape de diminution de la quantité de référence, jusqu'à ce que la décrémentation de la quantité de référence soit inférieure à la valeur prédéfinie ; et quand la décrémentation de la quantité de référence est inférieure à la valeur prédéfinie, la détermination de la quantité de référence diminuée en tant que quantité cible ; et
l'attribution, à l'extrémité de transmission, d'antennes de la quantité cible au terminal.

2. Procédé selon la revendication 1, dans lequel les informations de position comprennent :
des coordonnée de position ; et
la détermination, conformément aux informations de position, d'une quantité de référence d'antennes qui se trouvent à une extrémité de transmission et qui sont utilisées pour envoyer des données au terminal comprend :
l'acquisition de coordonnées de position d'une antenne à l'extrémité de transmission ;
le calcul d'une distance entre le terminal et l'antenne conformément aux coordonnées de position de l'antenne et aux coordonnées de position du terminal ;
la détermination d'un intervalle de distance cible dans lequel est comprise la distance ; et
la détermination, conformément à une correspondance entre un intervalle de distance et une quantité d'antennes, en tant que quantité de référence, d'une quantité d'antennes qui correspond à l'intervalle de distance cible.

3. Procédé selon la revendication 1, dans lequel les informations de position comprennent :
une qualité reçue de signal de référence, RSRQ, et/ou une puissance reçue de signal de référence, RSRP ; et
la détermination, conformément aux informations de position, d'une quantité de référence d'antennes qui se trouvent à une extrémité de transmission et qui sont utilisées pour envoyer des données au terminal comprend :
la détermination d'un intervalle de seuil de RSRP cible ou d'un intervalle de seuil de RSRQ cible dans lesquels sont comprises les informations de position ; et
la détermination, conformément à une correspondance entre un intervalle de seuil de RSRP et une quantité d'antennes ou une correspondance entre un intervalle de seuil de RSRQ et une quantité d'antennes, d'une quantité d'antennes correspondant à l'intervalle de seuil de RSRP cible ou à l'intervalle de seuil de RSRQ cible en tant que quantité de référence.

4. Procédé selon la revendication 1, dans lequel la quantité de référence est augmentée en utilisant un procédé par dichotomie ou par section d'or ; et/ou
la quantité de référence est diminuée en utilisant le procédé par dichotomie ou par section d'or.

5. Procédé selon l'une quelconque des revendications 1 à 4, dans lequel l'attribution, à l'extrémité de transmission, d'antennes de la quantité cible au terminal comprend :
la détermination qu'il existe ou non une antenne inactive dans les antennes à l'extrémité de transmission ;
quand une antenne active existe, la détermination qu'une quantité d'antennes inactives est inférieure ou non à la quantité cible ; et
quand la quantité d'antennes inactifs n'est pas inférieure à la quantité cible, la sélection d'antennes de la quantité cible parmi les antennes inactives et l'attribution des antennes de la quantité cible au terminal ; quand la quantité d'antennes inactives est inférieure à la quantité cible, l'attribution de toutes les antennes dans les antennes inactives au terminal, et l'attribution d'une antenne dans les antennes non inactives à l'extrémité de transmission au terminal, dans lequel une somme de la quantité d'antennes inactives et d'une quantité d'antennes non inactives attribuées au terminal est égale à la quantité cible ; ou
quand il n'existe aucune antenne inactive, la sélection d'antennes de la quantité cible parmi des antennes non inactives à l'extrémité de transmission et l'attribution des antennes de la quantité cible au terminal.

6. Appareil d'attribution d'antennes, comprenant :
une unité d'acquisition d'informations de position, configurée pour acquérir des informations de position d'un terminal ;
une unité de détermination de quantité de référence, configurée pour déterminer, conformément aux informations de position, une quantité de référence d'antennes utilisées pour envoyer des données au terminal ;
une première unité de détermination de performance de transmission, configurée pour déterminer qu'une différence de performance de transmission est inférieure ou non à un seuil de performance de transmission prédéfini, dans lequel la différence de performance de transmission est une différence entre la performance de transmission du terminal qui est basée sur des antennes de la quantité de référence et la performance de transmission du terminal qui est basée sur toutes les antennes à une extrémité de transmission ;
une première unité d'ajustement, configurée pour : quand la différence de performance de transmission n'est pas inférieure au seuil de performance de transmission prédéfini, augmenter la quantité de référence jusqu'à ce que la différence de performance de transmission soit inférieure au seuil de performance de transmission prédéfini, dans lequel la première unité de détermination de performance de transmission est configurée en outre pour déterminer qu'une différence de performance de transmission obtenue après l'augmentation de la quantité de référence est inférieure au seuil de performance de transmission prédéfini ;
une seconde unité d'ajustement, configurée pour : quand la différence de performance de transmission est inférieure au seuil de performance de transmission prédéfini, diminuer la quantité de référence ;
une seconde unité de détermination de performance de transmission, configurée pour déterminer qu'une différence de performance de transmission obtenue après la diminution de la quantité de référence est inférieure au seuil de performance de transmission prédéfini, dans lequel
la première unité d'ajustement est configurée en outre pour : quand la différence de performance de transmission obtenue après la diminution de la quantité de référence n'est pas inférieure au seuil de performance de transmission prédéfini, augmenter la quantité de référence jusqu'à ce que la différence de performance de transmission soit inférieure au seuil de performance de transmission prédéfini ;
une unité de détermination de variation de quantité de référence, configurée pour :
quand la différence de performance de transmission obtenue après la diminution de la quantité de référence est inférieure au seuil de performance de transmission prédéfini, déterminer qu'une décrémentation de la quantité de référence est inférieure ou non à une valeur prédéfinie, dans lequel
la seconde unité d'ajustement est configurée en outre pour : quand la décrémentation de la quantité de référence n'est pas inférieure à la valeur prédéfinie, diminuer la quantité de référence jusqu'à ce que la décrémentation de la quantité de référence soit inférieure à la valeur prédéfinie ; et
une seconde unité de détermination de quantité cible, configurée pour : quand la décrémentation de la quantité de référence est inférieure à la valeur prédéfinie, déterminer en tant que quantité cible la quantité de référence diminuée, et
une unité d'attribution, configuré pour attribuer, à l'extrémité de transmission, des antennes de la quantité cible au terminal.

7. Appareil selon la revendication 6, dans lequel les informations de position comprennent des coordonnée de position ; et l'unité de détermination de quantité de référence comprend :
une unité d'acquisition de coordonnées d'antenne, configurée pour acquérir des coordonnées de position d'une antenne à l'extrémité de transmission ;
une unité de calcul, configurée pour calculer une distance entre le terminal et l'antenne conformément aux coordonnées de position de l'antenne et aux coordonnées de position du terminal ;
une unité de détermination d'intervalle de distance cible, configurée pour déterminer un intervalle de distance cible dans lequel est comprise la distance ; et
une première sous-unité de détermination de quantité de référence, configurée pour déterminer, conformément à une correspondance entre un intervalle de distance et une quantité d'antennes, en tant que quantité de référence, une quantité d'antennes correspondant à l'intervalle de distance cible.

8. Appareil selon la revendication 6, dans lequel les informations de position comprennent une qualité reçue de signal de référence, RSRQ, et/ou une puissance reçue de signal de référence, RSRP ; et l'unité de détermination de quantité de référence comprend :
une unité de détermination d'intervalle de seuil cible, configurée pour déterminer un intervalle de seuil de RSRP cible ou un intervalle de seuil de RSRQ cible dans lesquels sont comprises les informations de position ; et
une seconde sous-unité de détermination de quantité de référence, configurée pour déterminer, conformément à une correspondance entre un intervalle de seuil de RSRP et une quantité d'antennes ou une correspondance entre un intervalle de seuil de RSRQ et une quantité d'antennes, en tant que quantité de référence une quantité d'antennes correspondant à l'intervalle de seuil de RSRP cible ou à l'intervalle de seuil de RSRQ cible.

9. Appareil selon la revendication 8, dans lequel l'unité d'attribution comprend :
une unité de détermination d'antenne inactive, configurée pour déterminer qu'une antenne inactive existe ou non ;
une unité de détermination de quantité d'antennes inactives, configurée pour : quand une antenne inactive existe, déterminer qu'une quantité d'antennes inactives est inférieure ou non à la quantité cible ; et
une sous-unité d'attribution, configurée pour : quand la quantité d'antennes inactives n'est pas inférieure à la quantité cible, sélectionner des antennes de la quantité cible parmi les antennes inactives et attribuer les antennes de la quantité ciblent au terminal ;
quand la quantité d'antennes inactives est inférieure à la quantité cible, attribuer toutes les antennes dans les antennes inactives au terminal, et attribuer une antenne dans les antennes non inactives à l'extrémité de transmission au terminal, dans lequel une somme de la quantité d'antennes inactives et d'une quantité d'antennes non inactives attribuées au terminal est égale à la quantité cible; ou
quand il n'existe aucune antenne inactive, sélectionner des antennes de la quantité cible parmi des antennes non inactives à l'extrémité de transmission et attribuer les antennes de la quantité cible au terminal.
